Europäisches Patentamt

European Patent Office

Office européen des brevets

(11) Publication number : **0 467 597 A2**

# EUROPEAN PATENT APPLICATION

(21) Application number : **91306304.6**

(51) Int. Cl.⁵ : **G06F 15/21**

(22) Date of filing : **11.07.91**

(30) Priority : **20.07.90 JP 190887/90**

(43) Date of publication of application :
**22.01.92 Bulletin 92/04**

(84) Designated Contracting States :
**DE FR GB**

(71) Applicant : **International Business Machines Corporation**
**Old Orchard Road**
**Armonk, N.Y. 10504 (US)**

(72) Inventor : **Kudo, Michiharu**
**Park-heim Kotake-Mukaihara 207-gho, 3-6-18, Komone**
**Itabashi-ku, Tokyo-to (JP)**

(74) Representative : **Killgren, Neil Arthur**
**IBM United Kingdom Limited Intellectual Property Department Hursley Park**
**Winchester Hampshire SO21 2JN (GB)**

(54) **Production plan modification and display apparatus.**

(57) A production plan modification and display apparatus is provided which enables to display a production schedule and modify the same in an interactive manner. In this system, each task is represented as one primitive task or a set of primitive tasks. A primitive task is defined as a part of a task for a time while the production amount or load is set unchanged. The primitive tasks are displayed on a screen as rectangulars and can be assigned attributes to set rules governing how their shapes change upon user's manipulation to the rectangular of one primitive task. A user can manipulate any primitive task and modify the shapes of not only that primitive task but also another one or more primitive tasks which belongs to the same task in accordance with the rules. After manipulation to one or more primitive tasks, a production schedule for one task or a plurality of tasks, which are displayed in an overlapping manner, can be optimized for example in terms of load balancing.

EP 0 467 597 A2

# FIG. 1A

MODIFICATION ENTRY DEVICE (5)

ATTRIBUTE SETTING DEVICE (4)

TABLE CALCULATOR (1)

MODIFICATION AMOUNT DIFFUSION DEVICE (6)

MODEL DATA GENERATOR (2)

## MODEL DATA STORAGE DEVICE (3)

| PRIMITIVE TASK | TASK |
|---|---|
| • PRIMITIVE TASK ID | • TASK ID |
| • ATTRIBUTE | • ATTRIBUTE DATA |
| • PRIMITIVE TASK DATA<br>UNIT PERIOD<br>PRODUCTION QUANTITY<br>PRODUCTION STARTING DATE<br>PRODUCTION TERMINAL DATE | • TASK ID<br>. . . |
| PRIMITIVE TASK ID<br>. . . | |

GRAPHIC REPRESENTATION INFORMATION GENERATOR (7)

(8)

FIG. 1A

# FIG. 1B

ATTRIBUTE SETTING DEVICE (4)

PRIMITIVE TASK SELECTING LEVER (− +)

- CONTROL: DEPENDENCY, INDEPENDENCY
- DIRECTION: TRANSVERSE, LONGITUDINAL
- WEIGHT: 0 1 2 3 4 5
- DATE: START, END
- PERIOD: START, END

TASK SELECTING LEVER (− +)

- DISTRIBUTION: INTERNAL DIVISION, PROPORTION, PERIOD
- BASIS: AREA, LOAD, CONSTANT
- INVERSION: INVERSION, SAME VALUE, PERIOD
- TARGET: LOAD, AREA, AREA/LOAD, AREA/PERIOD, PERIOD

SETTING BUTTON

FIG. 1B

The invention relates to apparatus and a method for modifying and displaying a production plan.

Conventional modification, such as flat distribution or load-balancing of a production plan is often effected against expression of the plan in the form of a spread sheet. When expressing a production plan in the form of a spread sheet, in general, different kinds of products are put on the ordinate of a table with the time base on the abscissa, so that respective production quantities (numerical value data) of products to be produced in a unit period (month, week, day or hour) are sequentially entered in different cells. In order to modify the production plan, a user rewrites such respective cell values when desired, or the cell is automatically rewritten by a recalculation mechanism of the spread sheet. However this use of a spread sheet has the two problems set out below.

1. Complicated manual calculation by the user is required. When the user modifies part of the plan while maintaining a constant production quantity of a predetermined product. Calculation by the user for modifying of the production amount is required in addition to the automatic calculation by the recalculation mechanism of the spread sheet.

2. The entire pattern is not readily comprehensible, ie it is difficult to confirm the entice change and pattern of the entire production plan, without enumeration of numerical values.

Also there is a more primitive method of expressing a production plan in which a load-accumulation graph is depicted on paper, without using a spread sheet. The load-accumulation graph is used when displaying the total load by production of a plurality of products as a single representation. There is no conventional method, as such, of modifying a production plan on a load-accumulation graph, it being always necessary to rewrite at least a part thereof.

Viewed from a first aspect, the present invention enables to be provided a production plan modification and display apparatus comprising:

means responsive to production plan information on at least one task for generating, for each said task, information on one or more primitive tasks defined by a duration for which a production amount is set unchanged;

means for storing said information on said primitive tasks as data for describing a production plan for said tasks;

means responsive to said stored information on said primitive tasks for generating graphical representation data of said production plan;

a display device responsive to said graphical representation data for graphically representing said production plan;

means for entering modification rules for modifying graphical figures representing said production plan;

means for storing said modification rules;

means for causing manipulation of a part of said graphical figure represented on said display device; and

means responsive to said manipulation for modifying said stored information on said primitive tasks according to said modification rules.

Thus interactive modification of a production plan is enabled via a graphical user interface.

A task is represented in the form of a model arranged as combination of primitive tasks whose work amount (production quantity, production load, production time) is set unchanged, so that the represented primitive tasks are modified an interactive and graphical manner under constraints or modification rules on to shapes of primitive tasks, relationships threreamong, positions thereof and so on.

The sum of the area of a graphical figure of a modified primitive task and the areas of graphical figures of the other primitive tasks in a task to which the said primitive task belongs can be held unchanged. This provides modification of the production plan while maintaining the work amount of the entire task constant.

One or both of a primitive task and a task can be assigned with attributes to establish a modification rule.

According to another aspect of the invention, there is provided a production plan modification method comprising the steps of:

generating, based on information on one or more tasks, for each said task, information on one or more primitive tasks each defined by a duration for which production amount is set unchanged;

storing said information on one or more for each said task as data for describing a describing plan for each said tasks;

representing said production plan on a display device using graphical figures based on said stored information on primitive tasks;

receiving one or more modification rules for said graphical figures representing said production plan, and storing the same;

modifying said graphical figures in accordance with said rules upon manipulation by an operator to one or more of said graphical figures; and

modifying said production plan based on the modification of said graphical figures.

Since the invention enables a production plan to be displayed graphically by primitive tasks having a constant work amount and controls modification of the graphical representation for respective tasks, it enables user friendly modification of the production plan.

An embodiment of the invention will be described below, with reference to the accompanying drawings, wherein:

Figure 1A is a block diagram showing the entire arrangement of an embodiment of the invention; Figure 1B is a diagram to explain an attribute setting device 4 of Figure 1A;

Figures 2 and 3 are diagrams to explain a primitive task and a task in a production plan model;

Figure 4 is a diagram to show a display example of a production plan including three tasks;

Figures 5, 6, 7 and 8 are diagrams to explain a control attribute;

Figure 9 is a diagram to explain a direction attribute;

Figure 10 is a diagram to explain a weight attribute;

Figures 11 and 12 are diagrams to explain a date attribute and a period attribute;

Figure 13 is a diagram to explain a target attribute;

Figure 14 is a diagram to explain a basis attribute;

Figure 15 is a diagram to explain a distribution attribute;

Figure 16 is a diagram to explain an inversion attribute;

Figure 17 is a diagram showing an attribute data list;

Figure 18 is a diagram showing an attribute setting panel represented as a window;

Figure 19 is a diagram showing a modification target location of a control primitive task;

Figure 20 is a diagram showing a distribution algorithm;

Figure 21 is a diagram showing a location calculating algorithm;

Figure 22 is a diagram showing a position deciding algorithm; and,

Figures 23, 24 and 25 are diagrams showing progressively an example of a process for load-balancing a plan including two tasks.

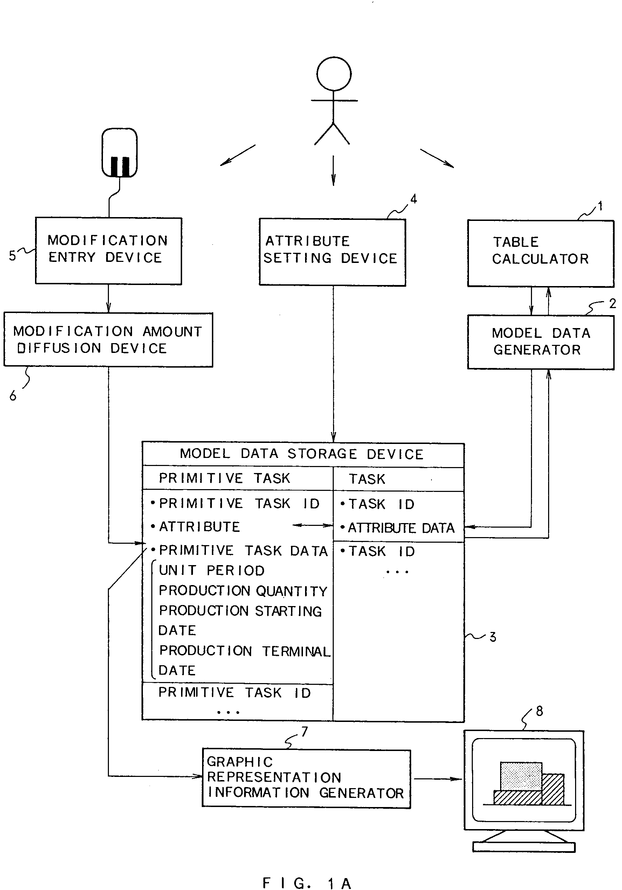

Referring to Figure 1A, Production plan modification apparatus in accordance with the invention includes a table calculator 1, a model data generator 2, a model data storage device 3, an attribute setting device 4, a modification entry device 5, a modification diffusion device 6, a graphic representation information generator 7 and a display device 8.

The table calculator 1 may a conventional spread sheet program into which a work planner enters a production plan in a conventional manner. For example, putting the sorts of a plurality of products on the ordinate of the table and the time base on the abscissa, production quantities of respective products (numerical data) to be produced in a unit period (month, week, day or hour) are sequentially entered in different cells. The production plan of the table calculator 1 is taken in the model data generator 2 which, in turn, converts it into data defining a production plan model, which will be described later. The graphic representation information generator 7, in receipt of the model data from the model data storage device 3, generates graphic representation data and supplies it to the display device 8. As a result, a graphic representation of the production plan is displayed as shown on the screen of the display device 8.

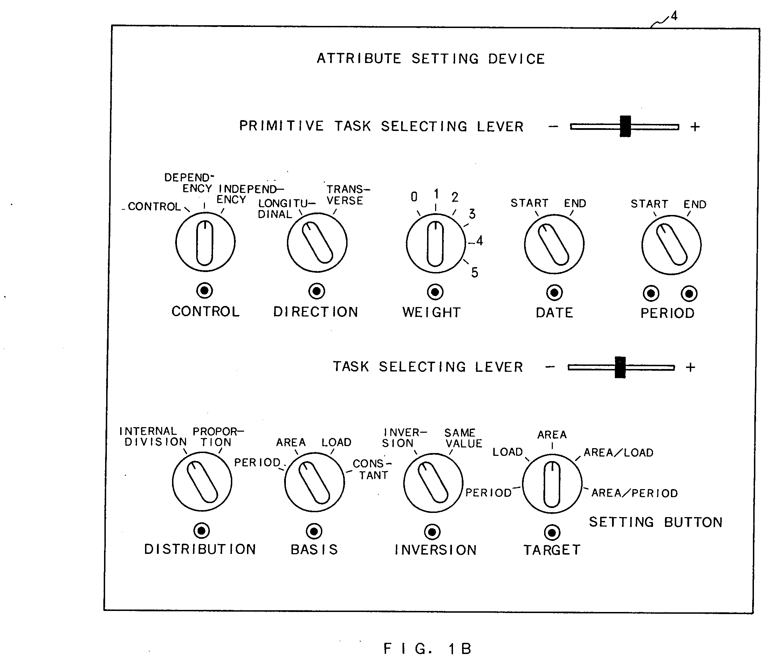

Modification of the production plan is executed by direct manipulation through the screen of the display device 8. Specifically, a plan modifier, who can be the work planner and will hereinafter be called a user) first uses the attribute setting device 4 to set attribute switches in desired positions. The attribute switches will be referred to later in greater detail with reference to Figure 1B. Selected combination of values of the attribute switches determines restraints to be satisfied with by respective primitive tasks and among respective primitive tasks. A primitive task or a task selecting lever is operated to identify a target primitive task or a target task, and a setting button is pressed. The status of the attribute switches then established is recorded as attribute data of primitive tasks or of tasks within the model data storage device 3. Subsequently, when the user displaces the position of an edge of a graphic figure of the plan shown on the display device 8 through the modification entry device, which can be a mouse device 5, the mouse operation and the attribute data and primitive task data such as production quantity per unit period, production starting date, and production terminal data, within the model data storage device 3 are read into the displacement amount diffusion device 6 for purposes of displacement calculation, distribution calculation, shape calculation and location calculation according to a method explained later. According to its result, primitive task data in model data storage device 3 is written in a modified form. The modified model data is sent to the graphical representation information generator 7, and a graphic figure of the modified production plan is displayed on the display device 8. The modified model data is inversely converted into production plan information by the model data generator 2 and supplied to the table calculator 1.

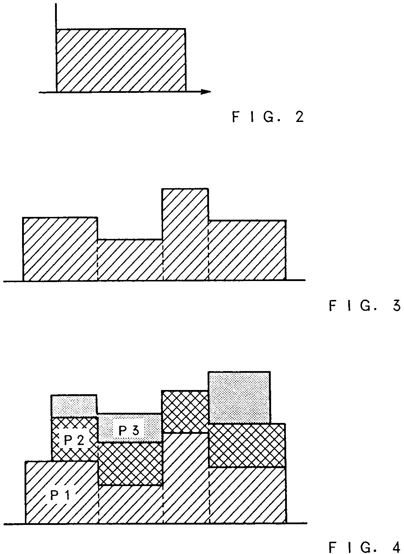

In this embodiment, production plan data is stored as a production plan model in the model data storage

EP 0 467 597 A2

device 3. The production plan model is formed of primitive tasks, which are basic component units of the plan, and tasks for binding them into a group. The primitive task is expressed in a rectangle on the display device 8 as shown in Figure 2. The primitive task is expressed, for each product or task, with a period for continuing a predetermined production load or quantity being regarded as a lump of plan. The abscissa of the rectangle indicates the time while the ordinate shows the production quantity or work load. The plan expression unit superior to primitive tasks is a task. As shown in Figure 3, a task is expressed by one or more primitive tasks aligned in the time base direction. Typically, a plan of a product is expressed as a task, and a period having a constant production load in the task is expressed as a primitive task. For simultaneous representation of a plurality of tasks, if, in particular, periods of two or more tasks overlap, one of the tasks is shown as overlapping the other task or tasks in a manner accumulating the production loads as shown in Figure 4. As a result, the total production load of each overlapping period is expressed by the position of the upper edge of each primitive task of the uppermost task. In Figure 4, P1, P2 and P3 indicate different tasks corresponding to different products.

The production plan data stored in the model data storage device 3 is formed of data on primitive tasks and data on tasks. The primitive task data has values: each primitive task ID for identifying each primitive task, attribute data for describing operational characteristics of the primitive task, and three values the shape of the primitive task, i.e., the unit period production quantity (corresponding to the height of a rectangle), the production starting date (corresponding to the lower left vertex of the rectangle) and the production terminal date (corresponding to the lower right vertex of the rectangle). The task data has values of each task ID for identifying each task and attribute data for describing operational characteristics of the task. Attributes of primitive tasks and tasks are referred to later in greater detail.

Except for the attribute data, the production plan model can be readily made in the model data generation 2, based on the production plan expressed on the spread sheet of the table calculator 1 (obtained by expressing the production quantity of each product to be produced in a unit period as contents of a cell and aligning plans of a plurality of products in a sequence of time as a table. More specifically, by deciding points where the production quantity in a unit period is changed in the time sequence, the task may be divided into primitive tasks at such points.

The expression of the production plan model on the display device 8 is executed by the graphic representation information generator 7. More specifically, the graphic representation information generator 7 receives shape data of primitive tasks, effects preliminary processing thereof for cumulative representation of tasks and, subsequently, calls a graphic representation interface fonction provided by a computer operating system to represent the graphic figure shown in Figure 4. In Figure 4, although the task P2 is shown as if it includes four primitive tasks, because of its always constant load, it is referred to as one primitive task in the production control model according to the invention.

Attribute data is used to establish a modification rule which determines how a primitive task and a task of the production plan model is modified by manipulation through the screen. The attribute data includes control attribute, direction attribute, weight attribute, date attribute, period attribute, distribution attribute, basis attribute, inversion attribute and target attribute. Each primitive task or task may selectively have either one value among possible values of respective attributes of the attribute data. The attribute values are set for desired primitive tasks or tasks by the user through that attribute setting device 4 of Figure. 1A.

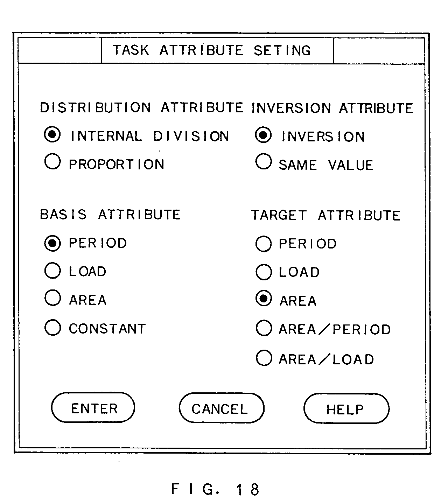

The attribute setting device 4 of Figure 1A is explained with reference to Figure 1B. The attribute setting device 4 is shown in the form of a hardware unit in Figure 1B. It may be so arranged, practically, or may be realized with software as explained later with reference to Figure 18.

In Figure 1B, round switches on the device are attribute switches which are used for selecting values for respective attributes. Round symbols shown below respective attribute switches are setting buttons which are pressed for setting the values selected by the attribute switches for a primitive task or a task. Attribute names of the attribute switches are written below the setting buttons. Possible values are fixed for each attribute and they are written as attribute values around each attribute switch. The primitive task selecting lever and the task selecting lever are used for moving them right and left to select a specific primitive task or task for witch the attribute data should be set.

The attribute data is explained below in sequence.

Control Attribute

The control attribute may selectively represent three values of "control", "dependency" and "independency". A primitive task whose attribute value is set in "control" is a primitive task which plays a leading role in modification of the plan. The primitive task of "control" is modified according to a modification target position and a shifting amount from the modification entry device 5. The primitive task whose attribute is set in "dependency" is affected by modification of the primitive task with the "control" attribute value. The primitive task whose

5

attribute value is set in "independency" does not undergo modification of the plan. However, its production starting time and production terminal time may be changed (production period length is not changed). Hereinbelow, a primitive task whose attribute value of the control attribute is "control" is called a control primitive task, and a primitive task of "dependency" is called a dependency primitive task.

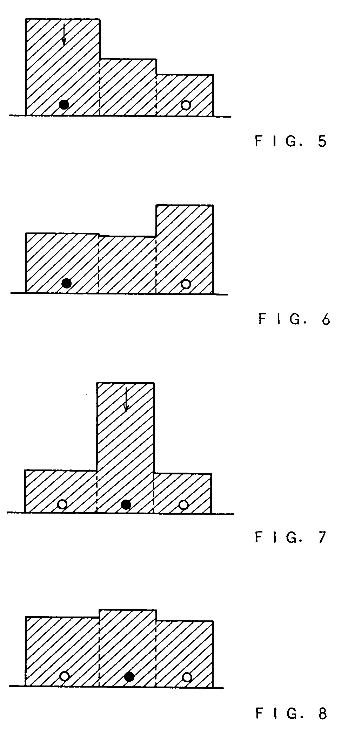

Referring to Figure 5, differences among operations of primitive tasks caused by different selected attribute values of the control attribute are explained below. Figure 6 shows a result from setting respective control attributes of "control" for the left primitive task, "independency" for the central primitive task and "dependency" for the right primitive task, respectively, and moving the upper edge of the left primitive task downwardly. Here assume that the example satisfies constraints for maintaining a constant total value of production quantities of three primitive tasks and constraints for changing the outer shape of a primitive task having the dependency control attribute in a longitudinal direction. Figure 7 shows that "control" is set for the central primitive task while "dependency" is set for the left and right primitive tasks. Figure 8 shows a result from moving the upper edge of the central primitive task downwardly. Assume here again that the example satisfies constraints for maintaining a constant total value of production quantities of three primitive tasks and constraints for changing the primitive tasks having the dependency control attribute in a longitudinal direction and equalizing the modification amounts.

Hereinbelow, primitive tasks having black-painted circles are referred to as control primitive tasks while primitive tasks having white circles as dependent primitive tasks.

Direction Attribute

The direction attribute may selectively have "longitudinal" and "transverse" two values as its attribute value. It is decided as its attribute value whether the outer shape of a primitive task having the control attribute value of "dependency" is changed in a longitudinal direction or in transverse direction. The direction attribute is used here, for a primitive task whose target attribute is the area, to select which of the longitudinal edge length or the transverse edge length should be adjusted to increase or decrease the area. Figures 5 and 6 show the direction attribute of the right primitive task as being set in "longitudinal". In contrast, Figure 9 shows a result of the same operation under the same constraints when the direction attribute is set in "transverse".

Weight Attribute

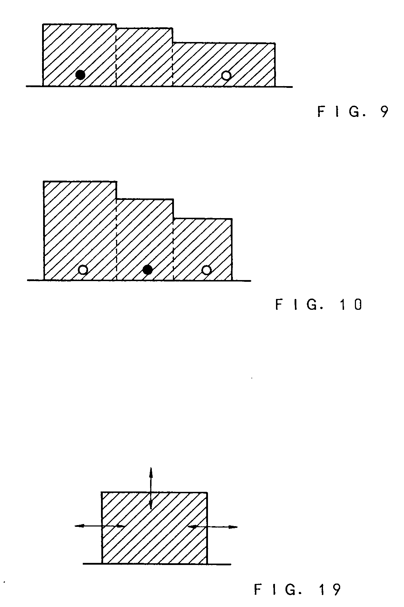

The weight attribute has a positive real number as its attribute value. When specific weighting is desired between modification amounts of primitive tasks having the control attribute valve of "dependency", the weight attribute is set in a corresponding numerical value as its attribute value. In Figure 7, the weight attribute is set in 1 in all primitive tasks. In contrast, Figure 10 shows a result of the same operation under the same constraints when the weight attribute is set in 3 for the left primitive task and 1 for the right primitive task.

Date Attribute

The date attribute may selectively have two values of "start" and "end" as its attribute value. The date attribute is set only when the production starting date and the production terminal date of a primitive task are desired unchanged. The attribute value of the production starting date set for a primitive task whose production starting date should be fixed while the attribute value of the producing terminal date set for a primitive task whose production terminal date should be fixed.

Period Attribute

The period attribute may have selective two values of "start" and "end" as its attribute value. The period attribute is set only when a time length difference between production starting dates or production terminal dates of two primitive tasks. When it is desired to fix the time length difference between the production starting date of a primitive task A and the production terminal date of a primitive task B, the attribute value of the production starting date is set for the primitive task A while the attribute value of the production terminal date is set for the primitive task B. In the period attribute, in addition to these attribute values, a primitive task ID of the partner primitive task and an attribute value indicative of distinction between the production starting date and the production terminal date of the partner are also stored. In order to set them using the attribute setting device, the primitive task A is selected by the primitive task selecting lever, the attribute switch of the period attribute is set in "start", and the left setting button is pressed. Subsequently, the primitive task B is selected by the primitive task selecting lever, the attribute switch of the period attribute is set in "end", and the right setting button is pressed. As a result, the period attribute is established between the primitive task A and the primitive task B.

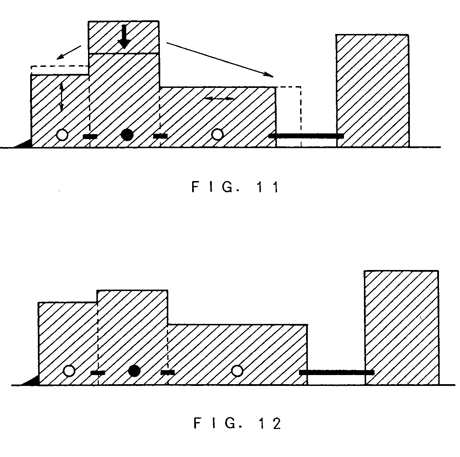

Operations of the date attribute and the period attribute are explained, referring to Figure 11. In Figure 11, the wedge-shaped mark indicates the date attribute, and the attribute value of the production starting date is set for the leftmost primitive task. The period attribute is expressed by the transverse bar mark, and the attribute value for the production terminal date and the production starting date are set between adjacent primitive tasks. For example, the attribute value of the production starting date is set for the rightmost primitive task while the attribute value of the production terminal date is set for the adjacent primitive task. Here the upper edge of the next-to-leftmost primitive task is moved downwardly. Under conditions where the direction attribute of the leftmost primitive task is longitudinal, that of the next-to-rightmost primitive task is transversal, the production starting date for the leftmost primitive task is fixed, the distance between adjacent primitive tasks is fixed, and the total value of production quantities of all primitive tasks is constant, then the rightmost primitive task is urged to the right (Figure 12).

### Distribution Attribute, Basis Attribute Inversion Attribute and Target Attribute

The distribution attribute, basis attribute, inversion attribute and target attribute have close relationships among them, and establish relationships among a plurality of primitive tasks having attribute values of "control" and "dependency" as their control attributes. More specifically, for a target set by the attribute value of the target attribute, the modification amount in a control primitive task is calculated, and, based on a distribution method set by the attribute value of the distribution attribute and using the target set by the attribute value of the basis attribute as the distribution rate, its modification amount is distributed to other dependency primitive tasks.

### Target Attribute

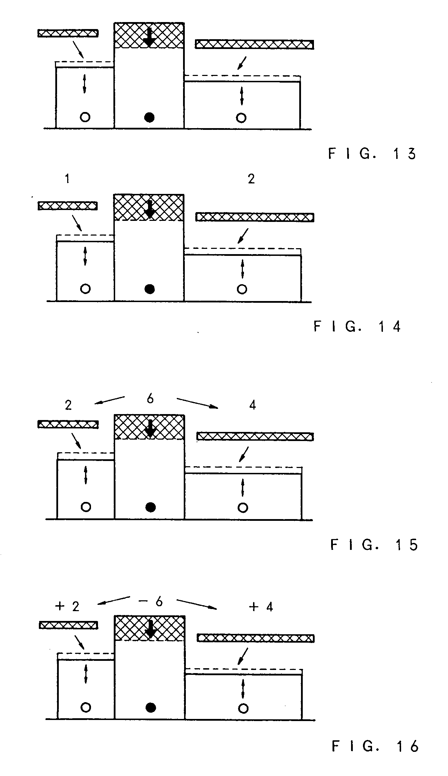

The target attribute may have selectively five values of "period" "load", "area", "area/load", and "area/period". When the shifting amount from the modification entry device 5 is taken as the modification amount of the period and when this value is employed as a distribution target for the dependency primitive task, the attribute value is set in "period". This also applies to the case of "load" (value corresponding to the day-by-day production quantity of a primitive task) and "area" (value corresponding to the production quantity of the primitive task). When two values, i.e., the value obtained by taking the shifting amount from the entry device as the modification amount of the area and the value obtained by taking the same as the modification amount of the period, are employed as distribution targets for the dependency primitive task, the attribute vale is set in "area/period". This also applies to the case of "area/load". In Figure 13, the modification amount of the central control primitive task is tranlated into the area and it is indicated by a shadow mark. When the modification amount of the area is taken as the distribution target for the dependency primitive task, the attribute of the target attribute is set in "area".

### Basis Attribute

The basis attribute may have selectively four values of "period", "area", "load" and "constant" as its attribute value. When a plurality of dependency primitive tasks are present, it is required to decide the rate of the modification amount distributed from a controlled primitive task to respective dependency primitive tasks, and it is set as the attribute value of the basis attribute (representative value forming the primitive task). When the attribute value is "period", "area" or "load", the modification amount is distributed to the dependency primitive tasks, based on the ratio between values indicated by the attribute values of respective primitive tasks. When the attribute values are constant, the modification amount is equally distributed to all dependency primitive tasks. In Figure 14, there are two dependency primitive tasks, in total, of the left primitive task and the right primitive task. Since the attribute value in Figure 14 is set in "period", the distribution ratio of the modification amount to both dependency primitive tasks is 1:2, taking the values of period of respective primitive tasks as a reference of the ratio. In other words, the modification amount 6 in the control primitive task is divided into 2 and 4, i.e., the ratio of 1:2, and these values are distributed to respective dependency primitive tasks.

### Distribution Attribute

The distribution attribute may have selectively two values of "internal division" and "proportion". When the modification amount is distributed while equalizing the modification amount of a control primitive task to the absolute value of the sum of the distributed modification amounts of the dependency primitive tasks, the attribute value is set in "internal division". In this case, the modification amount of the control primitive task is equal to distributed modification amounts of all dependency primitive tasks. When the modification amount of the control primitive task is distributed in accordance with the attribute value of the basis attribute, without distinguishing the control primitive task from dependent primitive tasks, the attribute value is set in "proportion". In Figure 15, the attribute value is set in "internal division". Therefore, the modification amount 6 of the area distributed to all dependency primitive tasks is equal to the modification amount 6 of the area of the control primitive task.

Inversion Attribute

The inversion attribute may have selectively two values of "inversion and "same value". In order that the code of the modification amount in the control primitive task and the code of the modification amount distributed to the dependency primitive tasks be inverted, the attribute value is set in "inversion". When they should not be inverted, the attribute value is set in "same value". In Figure 16, since the attribute is set in "inversion", the code of the modification amount of the area in the control primitive task is inverted from the code of the modification amount distributed to the dependency primitive tasks.

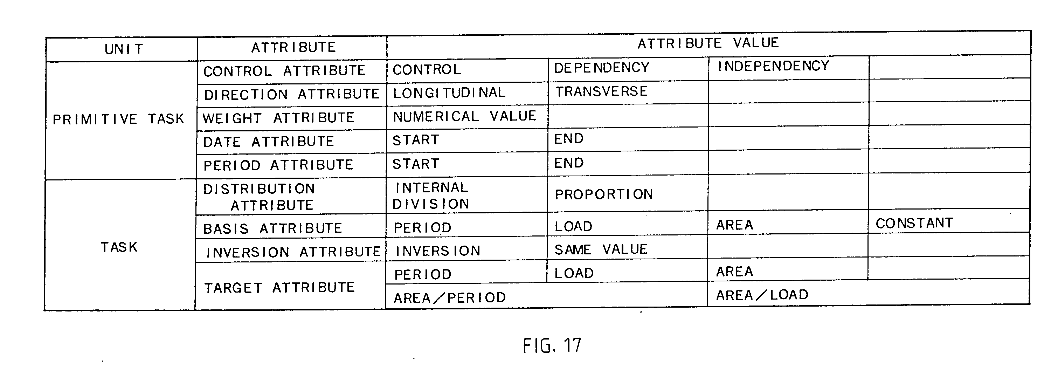

Figure 17 shows a list attribute data.

Note that the attribute setting device 4 of Figure 1A is practically realized using an entry window shown in Figure 18. The user can select any attribute value by click operation onto circled radio buttons through a mouse device, in lieu manipulation onto attribute switches.

The attribute data shown here is set individually using the window. However, a plurality of attributes for a plurality primitive tasks or tasks can be set by a single manipulation to decrease a large amount of labor for setting attributes (macro function). In particular, it is useful to bind, as a single manipulation, formal modification patterns often utilized during manipulation. Two examples thereof are fusible-deformation macro (vertical deformation manipulation as shown in Figures 5 and 6) and elastic-deformation macro (deformation manipulation which urges the position of the production starting date of the left primitive task in Figure 5 to the right while fixing the position of production terminal date of the right primitive task as if flattening the entire task from the transverse direction).

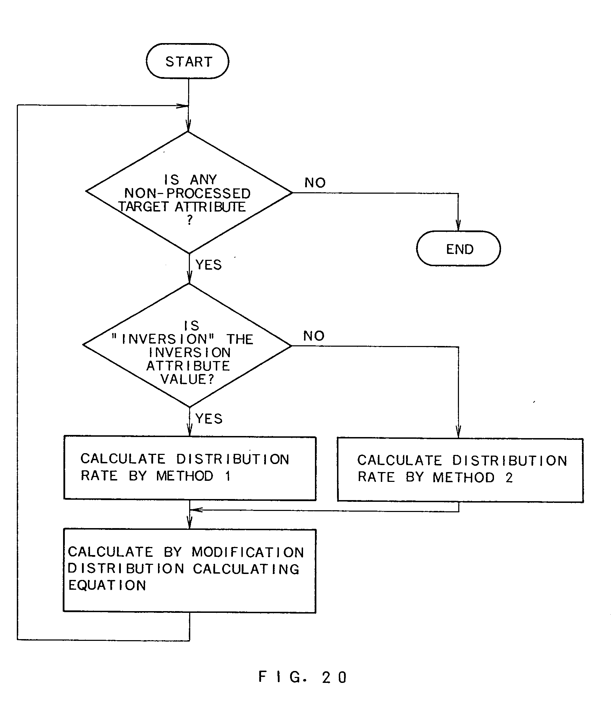

The modification entry device 5 transmits modification target positions and the shifting amount of a control primitive task to the modification amount transport device 6. As shown in Figure 19, three modified positions, i.e., the right and left vertical edges and the upper horizontal edge of the rectangle indicative of the primitive task, are set selectively as such modification target positions of a control primitive task. The shifting amount is indicated by a numerical value of a positional difference from the position prior to the modification at the modification position (a horizontal difference for a shifting amount of a vertical edge and a vertical difference for a shifting amount of a horizontal edge). Typically, these values may be indicated in an interactive manner using a mouse device (modification entry device 5) which is one of pointing devices. In this case, operability can be improved by mouse operation while looking at the plan in the form of a graphical representation of the display device. However, a joystick, or a touch panel or the like may be employed in lieu of the mouse device, and there is no need for limiting such entry means to the mouse device. Further, the modification target position or its modification amount may be entered from a file or the like through a batch transaction.

The modification amount diffusion device calculates the modification amount for a control primitive task and a dependency primitive task from the data of the modification entry device 5 and the data of the model data storage device 3, and stores the result as primitive task data of the storage device 3. Calculation of the modification amount is executed through four calculation steps: target modification amount calculation step, modification amount distribution calculation step, shape calculation step and location calculation step.

Target Modification Amount Calculation Step

This step calculates the modification amount when regarding shifting amount from the modification entry device 5 as the attribute value of the target attribute. For instance, when the target modification position of a control primitive task is the upper edge of a rectangle, with its shifting amount being 10, the width being 20 and the target attribute being the area, calculation is executed regarding the shifting amount 10 as the value of the area, and 200 which is obtained by multiplying the shifting amount 10 by the width 20 is the modification amount.

Modification Amount Distribution Calculation Step

This step distributes the modification amount obtained by the target modification amount calculation step to all dependency primitive tasks according to the distribution algorithm of Figure 20 as well as the following equation where variables accompanied by $\delta$ represent modification amounts of control primitive tasks or dependency primitive tasks. Note that the distribution algorithm is not referred to in detail because figure 20 itself fully

EP 0 467 597 A2

described the algorithm.

δ period i = δ period c x distribution rate i
(when the target attribute is "period" or "area/period")

δ load i = δ load c x distribution rate i
(when the target attribute is "load" or "area/load")

δ area i = δ area c x distribution rate i
(when the target attribute is "area")

where i is a primitive task whose attribute is "control" or "dependency", and c is a primitive task whose attribute is "control", and where i is the value calculated by the following equation.

When the distribution attribute is "interior division",

Method 1 (where the inversion attribute is "inversion"):

$$
\text{distribution rate } i
$$

$$
i = \text{dependency}
$$

$$
= \frac{-\;\overset{\text{basis}}{\text{attribute value } i} \;\times\; \overset{\text{weight}}{\text{attribute value } i}}{\underset{i\,=\,\text{dependency}}{\sum} \overset{\text{basis}}{\text{attribute value } i} \;\times\; \overset{\text{weight}}{\text{attribute value } i}}
$$

$$
\text{distribution rate } i = 1
$$

$$
i = \text{control}
$$

Method 2 (where the inversion attribute ns "same value"):

$$
\text{distribution rate } i
$$

$$
i = \text{dependency}
$$

$$
= \frac{-\;\overset{\text{basis}}{\text{attribute value } i} \;\times\; \overset{\text{weight}}{\text{attribute value } i}}{\underset{i\,=\,\text{dependency}}{\sum} \overset{\text{basis}}{\text{attribute value } i} \;\times\; \overset{\text{weight}}{\text{attribute value } i}}
$$

$$
\text{distribution rate } i = 1
$$

$$
i = \text{control}
$$

When the distribution rate is "proportional":

Method 1 (where the inversion attribute is "inversion"):

```
        distribution rate i


        i = dependency


                  basis                    weight
                - attribute value i    x   attribute value i
            =   -------------------------------------------
                  basis                    weight
                  attribute value c    x   attribute value c


        distribution rate i = 1
                i = control
```

Method 2 (where the inversion attribute ns "same value"):

```
    distribution rate i


        i = dependency


                  basis                  weight
                - attribute value i    x attribute value i
            =   -------------------------------------------
                  basis                  weight
                  attribute value c    x attribute value c


    distribution rate i = 1


        i = control
```

Shape Calculation

This step calculates the width (period) or the height (load) of a rectangle after modification from the modification amount distributed to respective primitive tasks in the modification amount distribution calculation step, according to the following equation.

$$\delta \; load \; i \;\; = \;\; \frac{original \; area \; i \;\;\; + \; \delta \; area \; i}{original \; period \; i \;\;\; + \; \delta \; period \; i} \;\;\;\;\; - \; original \; load \; i$$

(where the target attribute is "period", "area/period" or " area" and the direction at attribute is "longitudinal". )

$$\delta \; period \; i \; = \; \frac{original \; area \; i \;\;\; + \; \delta \; area \; i}{original \; load \;\; i \;\; + \; \delta \; load \; i} \;\;\;\; - \; original \; load \; i$$

(where the target attribute is "load", "area/load" or "area", and the direction attribute is "tranverse".)

The shape of the primitive task after modification is calculated by the following equation.

new load i = original load i + $\delta$ load i

new period i = original period i + $\delta$ period i

Location Calculation Step

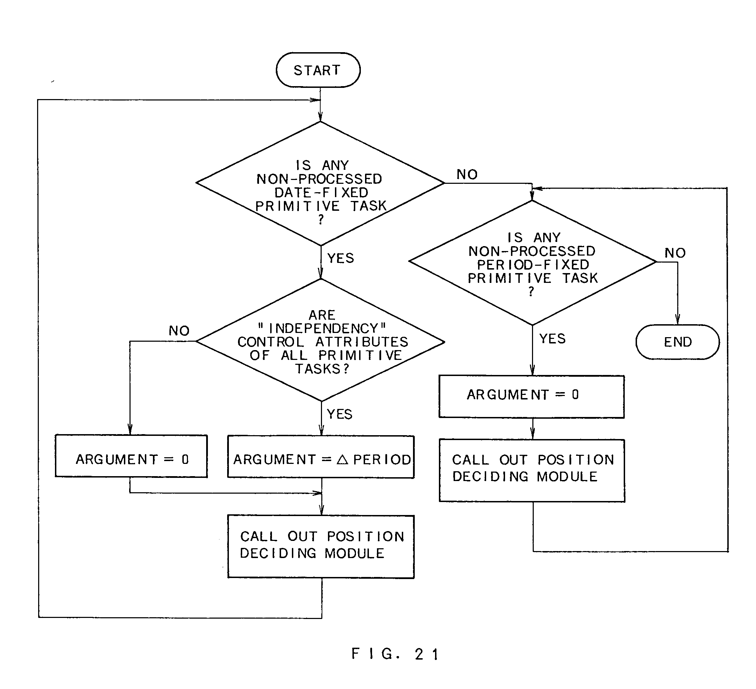

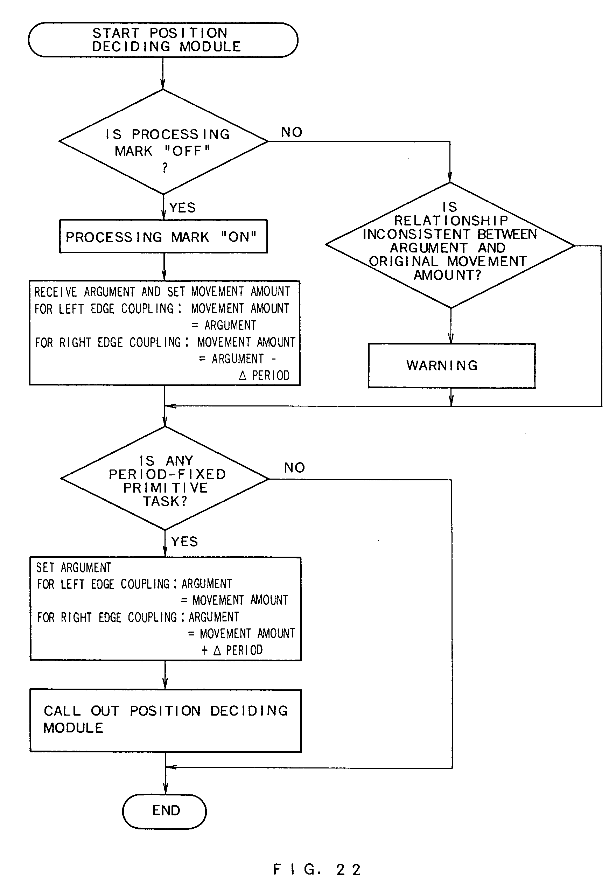

This step calculates a positional deviation from the position prior to modification on the production starting date of each primitive task, according to the location calculating algorithm of Figures 21 and 22. The location calculating algorithm is briefly explained below. A processing mark variable (initial value is "OFF") is set for each primitive task, and each primitive task whose location calculation has been done is set in "ON". If there is any primitive task whose processing mark variable is "OFF" and whose attribute value of the period attribute is set in "start" or "end", an argument is set, and a position deciding module is called. When all processing of the primitive task is finished and if there is any primitive task whose processing mark variable is "OFF" and whose attribute value of the period attribute is set in "start" or "end", an argument is set, and a position deciding module is called. In the position deciding module, the processing mark variable is set in "ON" for a primitive task which has not been processed yet, and any moved amount of the primitive task is calculated from the argument and the changed amount of the period. On the other hand, for a post-processing primitive task, it is investigated whether the already-calculated moved amount is inconsistent and, if any inconsistency is found, a message is shown on the screen to invite a user to cope with it. In this case, it is meant that the shifting amount from the entry device and the attribute data are inconsistent. If the period attribute is set from the primitive task to another primitive task (in Figure 22, the terms "left edge coupling" means the period attribute is set between the production starting date and another primitive task, and the terms "right edge coupling" means the same as the left edge coupling except the production starting date being replaced by the production terminal date), an argument value therefor is calculated, and a position deciding module is called back. Any primitive task whose processing mark variable is "OFF" upon completion of the algorithm processing indicates that it is a primitive task which has not been positionally deviated from the position prior to the modification. For each primitive task, the value obtained by adding the moved amount to the production starting date before modification becomes a new production starting date. In this case, the production starting date after modification does not always represent an integer: therefore, in order to change it into an integer, half-adjust or other processing and some calculating processing against the primitive task data are required.

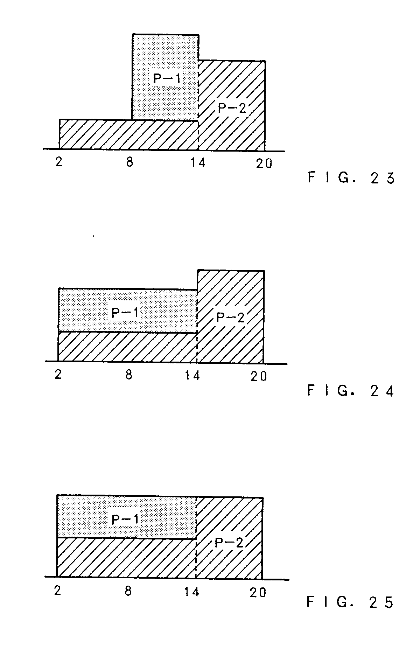

The operation example employed is an example of load- balancing. First referring to Figure 23, entire load-balancing is executed by extending the production period without changing the production quantity and the production terminal date of a task P-1. The task P-1 is modified by mouse operation. Therefore, the control attribute of the task P-1 is set in "control". In order to maintain the production terminal date of the task P-1 unchanged, the date attribute is set in "terminal date". Since the period of the task P-1 is modified through mouse operation, the target attribute is set in "period". Since the target of modification is a single primitive task, the other attributes may be any desired values. The original $\delta$ period c and distribution rate = 1 are obtained from the calculating equation of the target modification amount calculation step. From the equation in the modification amount distribution calculation step is obtained a new period c. From the shape calculation step is calculated the δ load c, and the shape after modification is obtained. From the position calculation step is obtained a deviation from the original position of the task P-1. Via these calculation steps, Figure 24 is displayed. Subsequently, load-balancing is done by reducing the load from 14th to 20th day without changing the production quantity of the task P-2. The right primitive task of the task P-2 is modified by means of mouse operation. Therefore, the control attribute of the right primitive task is set in "control" while the control attribute of the left primitive task is set in "dependency" in order to put the left primitive task under influence from modification of the right primitive task. In order that the production quantity of of the entire task P-2 be maintained upon modification of the area of the right primitive task of the task P-2, the target attribute is set in "area", the distribution attribute in "internal division", and the inversion attribute in "inversion". These attributes must be set when the modification amount in a control primitive task is compensated by the other primitive tasks to maintain the total value constant. Since the basis attribute and the weight attribute are used to determine the distribution rate when there are a plurality of primitive tasks for distribution, they may be any desired values here. The direction attribute value is set in "longitudinal" because modification of the right primitive task is adjusted by the height of the load of the left primitive task. By means of mouse operation, the upper edge is pointed as the target modified position, and the shifting amount is given by a numerical value. As a result of four calculation steps by the modification amount transport device 6, the shape and the location as modified of the task P-2 are obtained, and Figure 25 is displayed.

The foregoing description is given as producing a module date based on production plan information managed by the table calculation 1: however, representation modification may be executed by directly entering the model data, without using the table calculation.

The embodiment of the invention which has been described here is a computer program running on a conventional personal computer. However, it should be noted that the invention could be embodied in a dedicated hardware device or any combination of dedicated hardware and software.

Since the invention enables a production plan to be displayed graphically by primitive tasks having a constant work amount and controls modification of the graphical representation for respective tasks, it enables user friendly modification of the production plan.

## Claims

1. A production plan modification and display apparatus comprising:

means responsive to production plan information on at least one task for generating, for each said task, information on one or more primitive tasks defined by a duration for which a production amount is set unchanged;

means for storing said information on said primitive tasks as data for describing a production plan for said tasks;

means responsive to said stored information on said primitive tasks for generating graphical representation data of sail production plan;

a display device responsive to said graphical representation data for graphically representing said production plan;

means for entering modification rules for modifying graphical figures representing said production plan;

means for storing said modification rules;

means for causing manipulation of a part of said graphical figure represented on said display device; and

means responsive to said manipulation for modifying said stored information on said primitive tasks according to said modification rules.

2. A production plan modification and display apparatus as claimed in claim 1 further including spread sheet means for managing said production plan information on said one or more tasks.

3. A production plan modification and display apparatus as claimed in claim 1 or claim 2 wherein said production plan information on said task is modified according to said modified information on said primitive task.

4. A production plan modification and display apparatus as claimed in any preceding claim wherein said means for causing manipulation to the graphical figure represented on the display device is a mouse device.

5. A production plan modification and display apparatus as claimed in any preceding claim wherein said means for entering rules for modifying graphical figures representing said production plan assigns an attribute to said primitive task.

6. A production plan modification and display apparatus as claimed in any preceding claim wherein said means for entering rules for modifying graphical figures representing said production plan assigns a set of attributes to said primitive tasks.

7. A production plan modification method comprising the steps of:
  generating, based on information on one or more tasks, for each said task, information on one or more primitive tasks each defined by a duration for which production amount is set unchanged;
  storing said information on one or more primitives for each said task as data for describing a production plan for each said tasks;
  representing said production plan on a display device using graphical figures based on said stored information on primitive tasks;
  receiving one or more modification rules for said graphical figures representing said production plan, and storing the same;
  modifying said graphical figures in accordance with said rules upon manipulation by an operator to one or more of said graphical figures; and
  modifying said production plan based on the modification of said graphical figures.

8. A production plan modification method as claimed in claim 7 wherein said graphical figures of the production plan displayed on said display device are a set of graphical figures which represents said primitive tasks, respectively.

9. A production plan modification method as claimed in claim 8 wherein said modification rule causes modification to be executed so that the sum of the area of a graphical figure of one modified primitive task and the area of a graphical figure of another primitive task in a task to which said one primitive task belongs is maintained unchanged.

10. A production plan modification method as claimed in any of claims 7 to 9 wherein said production plan information on one or more tasks is provided in the form of table data.

5 ── MODIFICATION ENTRY DEVICE

ATTRIBUTE SETTING DEVICE ── 4

TABLE CALCULATOR ── 1

MODIFICATION AMOUNT DIFFUSION DEVICE

6

MODEL DATA GENERATOR ── 2

MODEL DATA STORAGE DEVICE

| PRIMITIVE TASK | TASK |
|---|---|
| • PRIMITIVE TASK ID | • TASK ID |
| • ATTRIBUTE | • ATTRIBUTE DATA |
| • PRIMITIVE TASK DATA<br>UNIT PERIOD<br>PRODUCTION QUANTITY<br>PRODUCTION STARTING<br>DATE<br>PRODUCTION TERMINAL<br>DATE | • TASK ID<br>. . . |
| PRIMITIVE TASK ID<br>. . . | |

3

GRAPHIC REPRESENTATION INFORMATION GENERATOR ── 7

8

F I G. 1 A

EP 0 467 597 A2

ATTRIBUTE SETTING DEVICE

PRIMITIVE TASK SELECTING LEVER ─ ▭■▭ +

DEPEND-
ENCY INDEPEND-
ENCY TRANS-
VERSE
LONGITU-
CONTROL DINAL 0 1 2 START END START END
3
4
5

CONTROL DIRECTION WEIGHT DATE PERIOD

TASK SELECTING LEVER ─ ▭■▭ +

INTERNAL PROPOR-
DIVISION TION INVER- SAME AREA
SION VALUE
PERIOD AREA LOAD LOAD AREA/LOAD
CONS-
TANT
PERIOD AREA/PERIOD

SETTING BUTTON

DISTRIBUTION BASIS INVERSION TARGET

FIG. 1B

F I G. 2

F I G. 3

F I G. 4

F I G. 5

F I G. 6

F I G. 7

F I G. 8

F I G. 9

F I G. 10

F I G. 19

F I G. 1 1

F I G. 1 2

F I G. 1 3

F I G. 1 4

F I G. 1 5

F I G. 1 6

| UNIT | ATTRIBUTE | ATTRIBUTE VALUE | | | |
|---|---|---|---|---|---|
| PRIMITIVE TASK | CONTROL ATTRIBUTE | CONTROL | DEPENDENCY | INDEPENDENCY | |
| | DIRECTION ATTRIBUTE | LONGITUDINAL | TRANSVERSE | | |
| | WEIGHT ATTRIBUTE | NUMERICAL VALUE | | | |
| | DATE ATTRIBUTE | START | END | | |
| | PERIOD ATTRIBUTE | START | END | | |
| TASK | DISTRIBUTION ATTRIBUTE | INTERNAL DIVISION | PROPORTION | | |
| | BASIS ATTRIBUTE | PERIOD | LOAD | AREA | CONSTANT |
| | INVERSION ATTRIBUTE | INVERSION | SAME VALUE | | |
| | TARGET ATTRIBUTE | PERIOD | LOAD | AREA | |
| | | AREA／PERIOD | | AREA／LOAD | |

FIG. 17

EP 0 467 597 A2

TASK ATTRIBUTE SETING

DISTRIBUTION ATTRIBUTE INVERSION ATTRIBUTE

◉ INTERNAL DIVISION    ◉ INVERSION
○ PROPORTION           ○ SAME VALUE


BASIS ATTRIBUTE         TARGET ATTRIBUTE

◉ PERIOD                ○ PERIOD
○ LOAD                  ○ LOAD
○ AREA                  ◉ AREA
○ CONSTANT             ○ AREA／PERIOD
                       ○ AREA／LOAD

( ENTER )   ( CANCEL )   ( HELP )

F I G.  1 8

F I G. 2 0

F I G. 2 1

```
        ┌─────────────────────────┐
        │     START POSITION       │
        │    DECIDING MODULE        │
        └────────────┬─────────────┘
                     │
                     ▼
               ╱───────────╲
              ╱  IS PROCESSING ╲      NO
             ╱    MARK  "OFF"   ╲───────────────────────┐
             ╲        ?         ╱                        │
              ╲───────────────╱                         │
                     │ YES                              ▼
                     ▼                           ╱───────────────╲
        ┌─────────────────────────┐             ╱        IS        ╲
        │  PROCESSING MARK  "ON"   │            ╱   RELATIONSHIP     ╲
        └────────────┬─────────────┘          ╱ INCONSISTENT BETWEEN ╲
                     │                         ╲   ARGUMENT AND       ╱
                     ▼                          ╲ ORIGINAL MOVEMENT  ╱
   ┌──────────────────────────────────┐         ╲    AMOUNT?       ╱
   │ RECEIVE ARGUMENT AND SET MOVEMENT │          ╲───────────────╱
   │ AMOUNT                            │                 │
   │ FOR LEFT EDGE COUPLING: MOVEMENT  │                 ▼
   │         AMOUNT = ARGUMENT         │         ┌─────────────────┐
   │ FOR RIGHT EDGE COUPLING: MOVEMENT │         │    WARNING       │
   │         AMOUNT = ARGUMENT −        │         └────────┬────────┘
   │                   Δ PERIOD        │                  │
   └──────────────┬───────────────────┘                  │
                  │◄───────────────────────────────────────┘
                  ▼
            ╱───────────╲
           ╱   IS ANY     ╲       NO
          ╱  PERIOD-FIXED  ╲──────────────────────┐
          ╲   PRIMITIVE    ╱                       │
           ╲    TASK?     ╱                        │
            ╲───────────╱                          │
                  │ YES                            │
                  ▼                                │
   ┌──────────────────────────────────┐           │
   │ SET ARGUMENT                      │           │
   │ FOR LEFT EDGE COUPLING: ARGUMENT  │           │
   │            = MOVEMENT AMOUNT      │           │
   │ FOR RIGHT EDGE COUPLING: ARGUMENT │           │
   │            = MOVEMENT AMOUNT      │           │
   │                + Δ PERIOD         │           │
   └──────────────┬───────────────────┘           │
                  ▼                                │
   ┌──────────────────────────────────┐           │
   │  CALL OUT POSITION DECIDING        │           │
   │  MODULE                           │           │
   └──────────────┬───────────────────┘           │
                  │◄────────────────────────────────┘
                  ▼
            ┌───────────┐
            │    END     │
            └───────────┘
```

F I G. 2 2

F I G. 2 3

F I G. 2 4

F I G. 2 5